# EUROPEAN PATENT APPLICATION

(11) **EP 2 434 685 A1**
(43) Date of publication of application: **28.03.2012**
(21) Application number: 09844804.6
(22) Date of filing: 11.09.2009
(51) Int. Cl.: H04L 12/24

(54) **METHOD AND SYSTEM FOR PROCESSING TELEPHONE BILL**

(30) Priority: 20.05.2009 CN 200910084139
(71) Applicant: ZTE Corporation, Shenzhen, Guangdong 518057 (CN)
(72) Inventor: QIAN, Yan, Guangdong 518057 (CN); CHEN, Jun, Guangdong 518057 (CN)
(74) Representative: Bongiovanni, Simone
(86) International application number: PCT/CN2009/073901
(87) International publication number: WO 2010/133052

(57) **Abstract**

The present invention discloses a phone bill processing method and system, the method includes: a phone bill collecting process collecting phone bill documents generated by a service processor; a phone bill storing process storing the phone bill documents, and an index creating process creating an index for the phone bill documents; and a phone bill query process inquiring a desired phone bill document according to the index. The present invention also discloses a phone bill processing system. Based on the method and the system, the efficiency of storage and inquiry of the phone bill can be ensured in the case of a large service amount. The present invention lowers the conflict between the storage of the phone bill and the query of the same, and improves the disaster tolerating ability of a database and the efficiency of query of the phone bill.

## Description

### Field of the Invention

The present invention relates to a phone bill processing technology, and in particular to a phone bill processing method and system.

### Background of the Invention

With the fast increase of telecommunication service amounts, the data amount of phone bills increases rapidly by magnitude. Therefore, during storing the phone bills, the demands on performances and space of the storing device become higher. Meanwhile, clients are no longer satisfied with several and even 24 hours required to inquire their detailed phone bills.

At present, a higher real-time performance can be obtained by the method of directly inquiring phone bill documents, but the operation of this method needs to be accomplished on a service processor, which affects the operation of main services and can become a fault point affecting the main services. Therefore, the method of directly inquiring the phone bill documents is generally not used in practice. In addition, the real-time query of the phone bill can also be easily achieved by adopting the enterprise version of certain database systems on a phone bill server, but this method increases the costs greatly and has a higher requirement for the configuration of the phone bill server.

Therefore, under the precondition of low cost, in the telecommunication industry, during the invitation of public bidding it has become an important criterion that not only the phone bills with the large data amount can be processed but also the requirement of clients to real-time inquire the phone bill can be met.

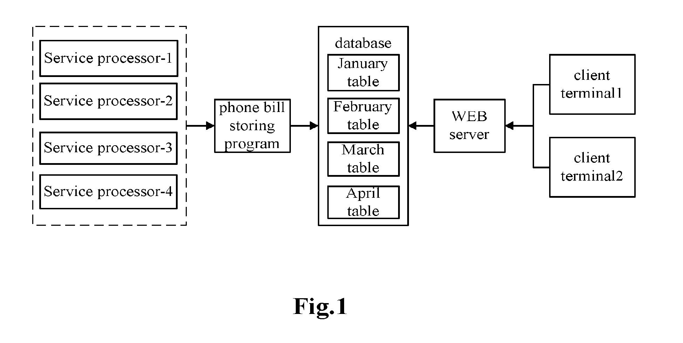

Fig. 1 is an architecture schematic view of the processing of phone bill collection, storage and query in the prior art. Currently, the method that satisfies the above criterion in the prior art is illustrated in Fig. 1. The particular flow is as follows: the service processor generates a phone bill after a call ends and provides the phone bill to a phone bill storing program; the phone bill storing program stores the phone bill to a corresponding time schedule in a database according to the time of generating the phone bill and divides the time schedule into a monthly schedule (such as January schedule, February schedule and so on), daily schedule or hour schedule and etc. according to the magnitude of data amount of phone bills; and after receiving a phone bill query request from a client terminal, the WEB server inquires the phone bill data in the database and returns the result to the client terminal. This architecture seems simple and clear, but has the following problems:
1. when the phone bill storing program and the phone bill query program access the database simultaneously, the conflict of database table lock is easily rendered and the efficiency of query can be decreased; and
2. as the database needs to provide a query function, all the time schedules in the database need to create indexes, and then the phone bill storing program also needs to create indexes when storing phone bill documents; and in addition, the phone bill collection and phone bill storage have a uniform process, and thus, when the data amounts of the phone bill increase, the efficiency of storing the phone bill documents decreases rapidly, which even renders the overstock of phone bill documents, and thus the phone bill documents can not be stored in time.

### Summary of the Invention

Whereas, the main purpose of the present invention is to provide phone bill processing method and system, which is capable of solving the problem of low efficiency of storage and query of phone bills in the case of large service amount.

In order to achieve the above purpose, the technical solution of the present invention is achieved as follows:
the present invention provides a phone bill processing method, and the method comprises:
a phone bill collecting process collecting phone bill documents generated by a service processor; a phone bill storing process storing the phone bill documents, and an index creating process creating indexes for the phone bill documents; and a phone bill query process inquiring a desired phone bill document according to the indexes.

In the above, when the phone bill collecting process collects phone bill documents, the method further comprises: the phone bill collecting process storing the phone bill documents to a local catalogue of the phone bill collecting process according to the generation time, and meanwhile deleting the phone bill documents generated by the service processor; and
correspondingly, the phone bill storing process stores the phone bill documents in the local catalogue according to the generation time of the phone bill documents.

The step of the phone bill storing process storing the phone bill documents is:
the phone bill storing process writes, depending on a storage state of a sequence table in a database recorded by a preset logic control table, the phone bill documents into the sequence table of the database according to a preset switching rule; and
correspondingly, the step of the index creating process creating indexes for the phone bill documents is: the index creating process periodically creating indexes for the sequence table according to the storage state and the index state of the sequence table in the logic control table.

After the index creating process creating indexes for the sequence table, the method further comprises:
a phone bill export process exporting periodically the phone bill documents in the sequence table to a daily table of the database according to the storage state, the index state and the export state of the sequence table in the logic control table; and
the index creating process creating periodically indexes for the daily table.

The method further comprises: a view creating process creating an intraday query view and a daily query view, adding the indexes of the sequence table into the intraday query view and adding the indexes of the daily table into the daily query view; and
correspondingly, the step of the phone bill query process inquiring the desired phone bill documents according to the indexes is: the phone bill query process inquiring the desired phone bill documents from the intraday query view or the daily query view.

The storage states of the sequence table comprise: blank table, storage in progress and storage completed;
the index state comprises: index not created and index created; and
the export state comprises: being not exported and being exported.

The method further comprises: a data cleaning process cleaning periodically the phone bill documents in the sequence table, the indexes of the sequence table, the phone bill documents in the daily table and the indexes of the daily table.

The present invention further provides a phone bill processing system, and the system comprises: a service processor, a phone bill collecting module, a phone bill storing module, a database, an index creating module and a phone bill query module, wherein,
the service processor, configured to generate phone bill documents;
the phone bill collecting module, configured to collect the phone bill documents;
the phone bill storing module, configured to store the phone bill documents;
the database, configured to save the stored phone bill documents;
the index creating module, configured to create indexes for the stored phone bill documents; and
the phone bill query module, configured to inquire desired phone bill documents from the database according to the indexes.

The database comprises a sequence table and a daily table;
correspondingly, the phone bill storing module writes the phone bill documents into the sequence table according to a preset switching rule; and
the index creating module creates indexes for the sequence table.

The system further comprises a phone bill export module, configured to export the phone bill documents in the sequence table to the daily table;
correspondingly, the index creating module is further configured to create indexes for the daily table; and
the system further comprises a view creating module configured to creates an intraday query view and a daily query view, add the indexes of the sequence table into the intraday query view and add the indexes of the daily table into the daily query view;
correspondingly, the phone bill query module is configured to inquire the desired phone bill documents from the database according to the intraday query view and the daily query view; and
the system further comprises a data cleaning module configured to clean the phone bill documents in the sequence table, the indexes of the sequence table, the phone bill documents in the daily table and the indexes in the daily table.

In the phone bill processing method and system provided by the present invention, the phone bill collecting process and the phone bill storing process are separated, wherein the phone bill collecting process is in charge of downloading the phone bill documents to the local catalogue of the phone bill collecting process and deleting the phone bill documents from the service processor; and the phone bill storing process stores the phone bill documents in the local catalogue. Thus the overstock of the phone bill documents on the service processor is prevented and the phone bill storing process will not affect the phone bill collecting process, so as to prevent phone bill storage from affecting the service processor. Also, indexes are not created for written sequence table and the daily table during phone bill storage, while the indexes are created after the phone bill is written, and thus the efficiency of phone bill storage is improved.

In addition, the present invention divides the phone bill storage into two sections: writing the phone bill generated on that very day into the sequence table and writing history phone bill into the daily table, and thus the daily table is not affected when the sequence is abnormal, which improving the disaster tolerating ability of the database. And in addition, the present invention associates the sequence table with the daily table by the indexes and the query views, so that a user only needs to inquire directly the views to directly access the phone bill documents in the database, and thus the conflict between the storage of the phone bill and the query of the phone bill is decreased and the efficiency of the query of the phone bill is improved.

### Brief Description of the Accompanying Drawings

Fig. 1 is an architecture schematic view of phone bill collection, storage and query in the prior art;
Fig.2 is a schematic flowchart of the phone bill processing method according to an embodiment of the present invention; and
Fig.3 is a schematic view of the structure relationship of the phone bill processing system according to an embodiment of the present invention.

### Detailed Description of Embodiments

### Functional Overview

Considering the problem in related technologies of low efficiency of phone bill storage and query in the case of a large service amount, the embodiment of the present invention provides a phone bill processing solution whose processing principle is described as follows: a phone bill collecting process collects phone bill documents generated by a service processor; a phone bill storing process stores the phone bill documents, and an index creating process creates indexes for the phone bill documents; and a phone bill query process inquires a desired phone bill document according to the indexes.

It needs to be explained that in the case of no conflict, the embodiments in the present application and the features in the embodiments can be combined with each other. The present invention will be detailed hereinafter with reference to the accompanying drawings and in conjunction with the embodiments.

In the following embodiments, the steps as illustrated in the flowchart of the accompanying drawings can be executed in a computer system, such as a group of computers that can execute instructions. Also, although the flow chart illustrates the logic order, in some situations the steps as illustrated or described can be executed in an order other than the order herein.

The technical solution of the present invention will be further detailed hereinafter in conjunction with the drawings and the specific embodiments.

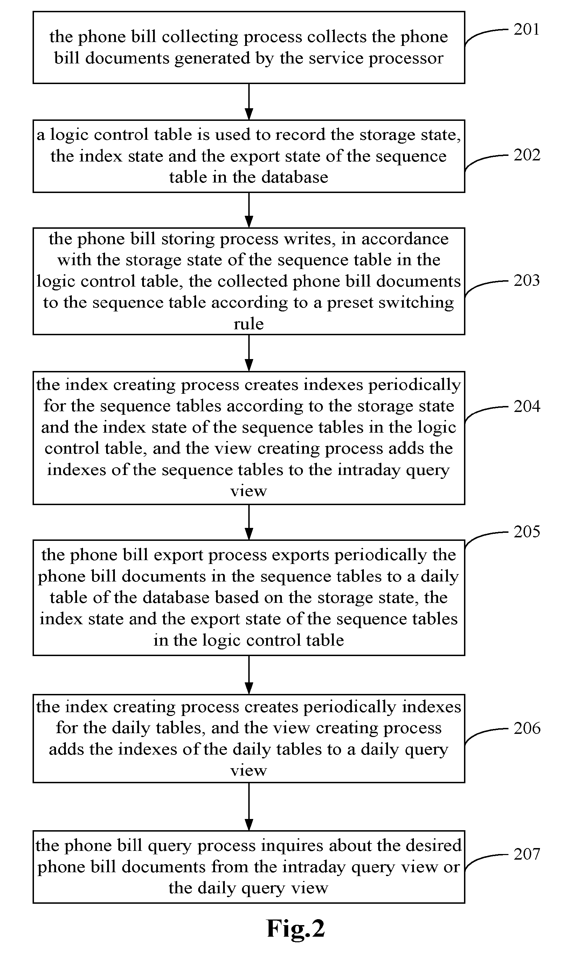

The flow of the processing method of the phone bill collection, storage and query according to the embodiment of the present invention is shown in Fig. 2. Fig.2 is a schematic flowchart of the phone bill processing method according to the embodiment of the present invention, including the following steps.

Step 201, the phone bill collecting process collects the phone bill documents generated by the service processor.

In practical application, there are multiple service processors which simultaneously generate phone bill documents, and one phone bill collecting process can start multi-threads to simultaneously download phone bill documents from the multiple service processors. Preferably, the phone bill documents can be downloaded to a local catalogue in a manner of using an FTP (File Transfer Protocol), and can be stored based on the generating time thereof. Simultaneously, the phone bill documents on the service processors are deleted. Certainly, the phone bill collecting process can also use other existing document downloading manners in the prior art to download the phone bill documents.

Step 202, a preset logic control table is used to record the storage state, the index state and the export state of the sequence table in the database.

When the collected phone bill documents are stored, firstly the phone bill documents need to be written to the sequence table of the database, which is completed by the phone bill storing process; then indexes are created for the sequence table, which is completed by the index creating process; and finally the phone bill documents in the sequence table are exported to the daily table of the database, which is completed by the phone bill export process.

How the above three processes of phone bill storage, index creation and phone bill export specifically operate the sequence table will be described referring to the following steps.

In the above, the database includes multiple sequence tables configured to store phone bill documents. In practical application, the number of the sequence tables can be set as desired. In the embodiments of the present invention, taking 1000 sequence tables as an example; each sequence table corresponds to a table name and a sequence number, for example, the sequence number of the sequence table named bill_m0001 is 1, the sequence number of the sequence table named bill_m0002 is 2, and the rest is done in the same way, and then the sequence number of the sequence table named bill_m1000 is 1000.

There can be multiple sequence tables in the database of the embodiments of the present invention. The phone bill documents are respectively stored in the individual sequence tables, and thus the number of the phone bill documents stored in each sequence table is limited, which can improve the speed of creating indexes for the phone bill documents in the sequence tables. Meanwhile, creating indexes for the phone bill documents will be described referring to the following steps.

The embodiments of the present invention record through the preset logic control table the states that the above three processes of phone bill storage, index creation and phone bill export operate the sequence tables wherein writing the phone bill documents in the sequence tables is referred to as storage of the sequence tables, the process of which is represented by storage states which are divided into three states: blank table (that is, writing phone bill documents to the sequence table has not been started), storage in progress (that is, phone bill documents are being stored in the sequence table) and storage completed (that is, phone bill documents have been written into the sequence table). The process of creating indexes for the sequence tables is represented by index states which are divided into two states: index not created and index created. The process of exporting phone bill documents in the sequence tables to the daily table is represented by export states which can be divided into two states: not-exported, and exported. It needs to be indicated that this step can also be executed prior to step 201.

The phone bill storing process, the index creating process and the phone bill export process perform corresponding operations according to the individual states of the sequence tables recorded in the logic control table. The operations performed by the above three processes will be described hereinafter in conjunction with the specific examples of Table 1.

**Table 1**

| Sequence Number | Table Name | Starting Time | Ending Time | Storage State | Index State | Export Sate |
|---|---|---|---|---|---|---|
| 1 | bill_m0001 | 2008-8-18 10:25 | 2008-8-18 10:30 | 2 | 1 | 1 |
| 2 | bill_m0002 | 2008-8-18 10:30 | 2008-8-18 10:35 | 2 | 1 | 0 |
| 3 | bill_m0003 | 2008-8-18 10:35 | 2008-8-18 10:40 | 2 | 0 | 0 |
| 4 | bill_m0004 | 2008-8-18 10:40 | | 1 | 0 | 0 |
| 5 | bill_m0005 | | | 0 | 0 | 0 |
| ... | ... | ... | ... | ... | ... | ... |
| 1000 | bill_m1000 | | | 0 | 0 | 0 |

In the above, the starting time refers to the time when writing the phone bill documents to the sequence table, that is, the starting time of the storage of the sequence tables; and the ending time refers to the time when stopping writing the phone bill documents to the sequence tables, that is, the ending time of the storage of the sequence tables. With respect to the storage states, 0 refers to the blank table, 1 refers to the storage in progress, and 2 refers to storage completed. With respect to the index states, 0 refers to index not created, and 1 refers to index created. As for the export states, 0 refers to being not exported, and 1 refers to having been exported. Certainly, the values corresponding to the states in the sequence tables can also be set in other ways as long as the states can be explained clearly.

It needs to be indicated that the initial states of the storage state, the index state and the export state of the sequence table are of blank table (0), index not created (0) and being not exported (0) respectively.

Step 203, the phone bill storing process writes, depending on the storage state of the sequence table in the logic control table, the collected phone bill documents to the sequence table according to a preset switching rule.

In the embodiment of the present invention, the phone bill storing process sequentially writes the phone bill documents in the local catalogue to the sequence tables according to their generation time (first come first serve). During selecting the sequence table to be written, the sequence tables with the storage state of the blank table (0) should be selected according to the sequence number.

In addition, during writing the phone bills into the sequence tables, it is further necessary to continuously switch the sequence tables that need to be written according to a preset switching rule. The so-called switching rule can refer to the switching time of the sequence tables, for example, when the duration of continuously writing the phone bill documents to the current sequence table has reached a preset switching time, writing the phone bill documents to the sequence table is stopped, and it is switched to the next sequence table in a state of blank table, and then the phone bill documents are continuously written. Certainly, the switching rule can be set according to the capacity of the sequence tables or other conditions, for example, the maximum data amount of the phone bill documents that can be written into one sequence table is set, and etc.

As shown in Table 1, the time interval between the starting time and the ending time is the switching time. Supposing it is of five minutes, the phone bill documents are written into the sequence table 1 within the period of time from the 0^{th} minute to the 5^{th} minute, the phone bill documents are written into the sequence table 2 within the period of time from the 5^{th} minute to the 10^{th} minute, and the rest is done in the same way, that is, switching to one sequence table every five minutes.

When the storage of a sequence table is started, the logic control table changes its storage state from blank table (0) to the storage in progress (1). When the storage of the sequence table has been completed, the logic control table changes its storage state from the storage in progress (1) to storage completed (2). As shown in table 1, sequence tables 1, 2 and 3 are in the state of storage completed, and sequence table 4 is in the state of storage in progress. When the storage of the sequence table 4 has been completed, writing phone bill documents to the sequence table 5 in the state of blank table is started. It needs to be indicated that if the switching time is up while the next sequence table of the current sequence table has malfunction, for example, the sequence table is not in the state of blank table (0), the phone bill storing process continues writing the phone bill documents into the current sequence table and sends an alarm via an alarming process, and then a maintenance process maintains the sequence table, and when the sequence table is returned to normal, the phone bill storing process starts to write the phone bill documents to the sequence table that has been returned to normal.

It is known from step 201 and step 203 that in the embodiment of the present invention, the phone bill collecting process and the phone bill storing process are separated, wherein the phone bill collecting process is in charge of downloading the phone bill documents to the local catalogue of the phone bill collecting process and deleting the phone bill documents from the service processors; and the phone bill storing process stores the phone bill documents in the local catalogue, such that not only the overstock of the phone bill documents on the service processors is prevented but also the phone bill storing process will not affect the phone bill collecting process, thus preventing phone bill storage from affecting the service processors.

Step 204, the index creating process creates indexes periodically for the sequence tables according to the storage state and the index state of the sequence tables in the logic control table, and the view creating process adds the indexes of the sequence tables into the intraday query view in that very day.

The index creating process periodically scans the sequence tables in the logic control table, wherein if there exists a sequence table in the state of storage completed and the state of index not created, it immediately creates an index for it, and the index is in a mapping relationship with the phone bill documents included by the sequence table, such that creating indexes for the sequence tables indicates creating indexes for the phone bill documents in the sequence tables; then the view creating process adds the indexes of the sequence tables into the intraday query view in that very day, for use by the phone bill query process during inquiring the phone bills.

The period for which the index creating process scans the logic control table can be set according to practical requirement, while this should follow a principle of a fast index creating speed. In conjunction with the example in table 1 that the switching time of the sequence tables is of five minutes, the period for which the index creating process scans the logic control table can be set as five minutes. In general, the data amount of the phone bill documents in a time granularity of five minutes is relatively small, and the index creating speed will be faster, thus the period in which the phone bill documents are generated, collected, stored and then are available for query will be short, for example, about five minutes, which satisfies users' requirement of real-time query of the phone bills. Hence, it can be seen that the settings of the above switching time and the period for which the index creating process scans the logic control table are related to the speed of index creation.

As shown in table 1, sequence table bill_m0003 is in states of storage completed and index not created, and then the index creating process creates an index for the sequence table bill_m0003. After the index has been created, the logic control table changes the index state of the sequence table from the state of index not created (0) to the state of index created (1). Specifically the index can be created using index creating technologies in the prior art, which is omitted herein.

In addition, the above intraday query view aims to make it more convenient for the users to inquire the phone bills and to simplify the flow of the phone bill query process in inquiring the phone bills, and is created by the view creating process. The indexes of the sequence tables including the phone bill documents generated in that very day are added to the view, such that the intraday query view can be correlated with all the sequence tables in that very day via the indexes, and the indexes of the sequence tables are in a mapping relationship with the phone bill documents included by the sequence tables, and thus the phone bill query process only needs to directly inquire the intraday query view so as to directly access desired phone bill documents, without paying attention to which sequence table the desired phone bill documents is in.

Step 205, the phone bill export process exports periodically the phone bill documents in the sequence tables to a daily table of the database based on the storage state, the index state and the export state of the sequence tables in the logic control table.

This step needs to be executed within a period of a smaller service amount and/or a smaller number of phone bills, and in the embodiment of the present invention, this period is referred to as an idle time.

The phone bill export process periodically scans the logic control table during the idle time. If there exists a sequence table in states of storage completed (2), index created (1) and not exported (0), the phone bill export process exports the phone bill documents in the sequence table to a corresponding daily table according to their generation time. In the above, the daily tables in the database are divided into 366 pieces corresponding to the 366 days of one year, and each daily table corresponds to a table name and a sequence number, for example, supposing the table name of the daily table of 1, January is bill_d0101, the sequence number is 1; the table name of the daily table of 2, January is bill_d0102, the sequence number is 2, and the rest is done in the same way, and then the table name of the daily table of 31, December is bill_d1231, the sequence number is 366.

As shown in table 1, the sequence table bill_m0002 is in states of storage completed, index created and not exported, and then the phone bill export process exports the phone bill documents in the sequence table to a corresponding daily table. Supposing the sequence table includes phone bill documents generated on 1, January and 2, January, the phone bill documents generated on 1, January are exported to the daily table bill_d0101 of 1, January, and the phone bill documents generated on 2, January are exported to the daily table bill_d0102 of 2, January. After all the phone bill documents of the sequence table have been exported, the logic control table changes the export state of the sequence table from the state of being not exported (0) to the state of being exported (1).

It needs to be indicated that the original daily tables have no indexes, and thus the phone bill documents only need to be written into the daily tables during exporting the phone bill documents in the sequence tables to corresponding daily tables, without writing the corresponding indexes, and thus the efficiency of exporting the phone bill documents to the daily tables is very high and, this step is executed only in the idle time each day. Herein, transferring the data has minimum influences on writing the phone bill documents into the sequence tables or daily tables and inquiring the phone bills.

In addition, the embodiment of the present invention is not limited to only setting sequence tables and daily tables, and setting monthly tables, yearly tables and etc. can also be possible according to actual needs. The operations of exporting the phone bill documents in the sequence tables to the monthly tables and the yearly tables, or exporting the phone bill documents of the daily tables to the monthly tables and yearly tables are the same with exporting the phone bill documents in the above sequence tables to the daily tables, which thus are omitted herein.

Step 206, the index creating process creates indexes for the daily tables periodically, and the view creating process adds the indexes of the daily tables into a daily query view.

Preferably, it can be set that the index for the daily table of the previous day is created at wee hours of each day. In general, the service amount and the phone bill data between 20:00 and 24:00 each day are relatively small, and thus the phone bill export process has enough time to export the current phone bill documents in the sequence table to a corresponding daily table. When 0:00 of the next day, it is deemed that the phone bill documents of the previous day have all been exported to the daily tables, and at this time the intraday query view will delete the indexes corresponding to the sequence tables of the previous day and will not be correlated with the sequence tables of the previous day, but will be correlated with the intraday sequence tables. At the same time, the sequence tables of the previous day and their corresponding indexes are all in an idle state.

Herein, the index creating process creates indexes for the daily table corresponding to the phone bill documents of the previous day, and the indexes are also in a mapping relationship with the phone bill documents in the daily table. Thus creating indexes for the daily table indicates creating indexes for the phone bill documents in the daily table. Also, the view creating process adds the indexes into the daily query view for use by the phone bill query process during inquiring the phone bills. For example, indexes for the daily table of 1, January are created at wee hours of 2, January and are added to the daily query view, and the daily query view can be correlated with multiple daily tables via indexes of the multiple daily tables, and thus the phone bill documents of multiple days prior to that very day can be inquired via the daily query view.

Here, if the phone bill documents of the previous day need to be inquired, they can be directly accessed via the daily query view; while the sequence tables of the previous day and the corresponding indexes wait to be deleted by the data cleaning process when it performs a periodical deleting task.

If the database includes monthly tables, yearly tables and etc., corresponding monthly views and yearly views should also be created, which are specifically set according to practical needs.

It needs to be indicated that it can be seen from steps 204 and 206 that the tables (sequence tables and daily tables) correlated with the query views are determined according to a current time, and thus the intraday query view and the daily query view can be combined into one query view, and when phone bill documents need to be inquired, they can be inquired in the query view according to the query time provided by users. Creating the query views is beneficial to improve the speed of inquiring the phone bill, so as to meet users' requirement of real-time query of the phone bills.

Step 207, the phone bill query process inquires the desired phone bill documents from the intraday query view or the daily query view.

The phone bill query process can inquire the phone bills at any time according to needs of users. The phone bill query process performs an phone bill query operation from corresponding query views according to the time range selected by the users, as the tables (sequence tables and daily tables) correlated with the query views are determined according to the current time. Thus the phone bill query process need not consider whether a sequence table or a daily table needs to be inquired currently, but just needs to directly perform query from the query views.

The phone bill query process can be realized by a WEB service. During inquiring the phone bill documents, the embodiment of the present invention uses an Asynchronous JavaScript and XML (short for AJAX) technology. When the phone bill documents of multiple days need to be inquired, the phone bill documents of one day are immediately displayed on a WEB page for users' review as long as they are obtained through the query views. At the same time, the background continues the query and returns the query results of each day step by step which are displayed on the WEB page. This query manner optimizes the experience of the users, compared with the manner that all the phone bill documents are obtained and then displayed to the users together.

If the time range of the phone bill query is from 1, January to 10, January, the WEB server will first inquire the daily query view part of 10, January in the database through the query views, and the result thereof will be displayed on the webpage immediately after coming out. This process takes five seconds at most generally. Then the background will continue inquiring the data of 9, January, and the result thereof will be added to the already exhibited WEB page immediately after obtaining it. This query is continued in this way until the query are finished and users are allowed to stop the query in the halfway. During the overall process, users can use about five seconds to see the phone bill data, and also can interrupt the query, so that not only users can see the phone bills inquired as quickly as possible but also the flexibility of the query control is also increased.

In addition, the database cannot store the phone bill documents unlimitedly due to its limited capacity, and thus a data cleaning process is needed to periodically eliminate the phone bill documents in the database.

As for eliminating the phone bill documents in the sequence tables: firstly, the longest period of the sequence tables for storing the phone bill documents is set as desired, and the longest period takes the ending time of each sequence table in the logic control table as a starting time, and the phone bill documents in the sequence table and the indexes corresponding to the sequence table are deleted when the longest period expires. In conjunction with the example in the table 1 of the embodiment of the present invention, the database includes 1000 sequence tables, and the switching time thereof is of five minutes, then the 1000 sequence tables can be used for 3.47 days. As the 1000 sequence tables need to be recycled in use, the longest period of each sequence table for storing the phone bill documents can be set as three days, that is, the phone bill documents will be deleted after they have been stored in the sequence table for three days.

In addition, it is not necessary for the data cleaning process to minutely check whether the phone bill documents in the sequence tables have been stored for three days. Thus a period for cleaning the sequence tables needs to be set, for example, cleaning is performed every one hour. It should be noted that the data cleaning process can clean the exported sequence tables only according to export states of the sequence tables in the logic control table; and after the cleaning, the logic control table initializes the storage state, the index state and the export state of the sequence tables as: blank table, index not created and not exported, for use by the phone bill storing process during storing the phone bill documents.

As for eliminating the phone bill documents in the daily tables: preferably, the longest period of the daily tables for storing the phone bill documents can be set as three months, and takes the generation time of the phone bill documents as a starting time, and the phone bill documents will be eliminated immediately after they have been stored in the daily table for up to three months, and at the same time the indexes corresponding to the daily table are deleted; and in addition, the period of the data cleaning process for eliminating the daily tables can be set as performing cleaning once every month.

To make it more convenient for users to know the processing that the respective processes perform on the phone bill service, a log process is further used to write into a log table the operations such as the phone bill collecting process collecting the phone bill documents, the phone bill storing process writing the phone bill documents into the sequence tables (switching of the sequence tables), the index creating process creating indexes of the sequence tables and the daily tables, the phone bill export process exporting the phone bill documents from the sequence tables to the daily tables, and the view creating process creating query views. Users can fully know the processing of the phone bill service through the log table; and simultaneously, the data cleaning process also needs to periodically clean the log table, for example, the log table can be set to store the logs of three months as desired, and the log table is cleaned once each month.

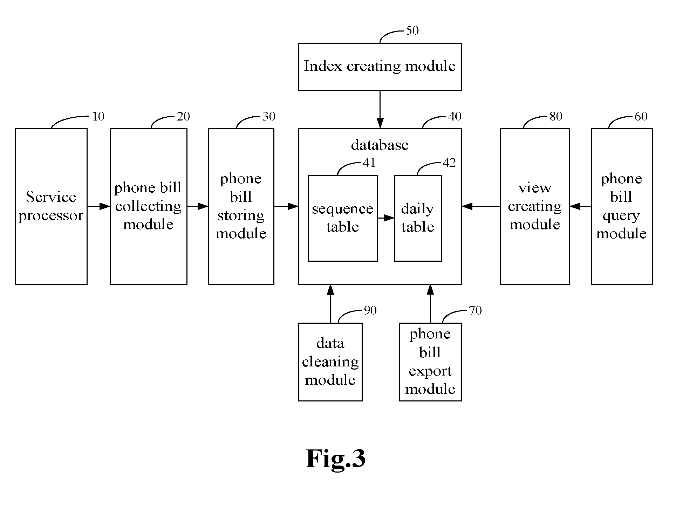

To realize the above phone bill processing method, the present invention also provides a phone bill processing system. As shown in Fig.3, it is a schematic view of the structure relationship of the phone bill processing system according to an embodiment of the present invention. The system comprises: a service processor 10, a phone bill collecting module 20, a phone bill storing module 30, a database 40, an index creating module 50 and a phone bill query module 60, wherein,
the service processor 10 is configured to generate phone bill documents;
the phone bill collecting module 20 is configured to collect the phone bill documents;
the phone bill storing module 30 is configured to store the phone bill documents;
the database 40 is configured to store the stored phone bill documents;
the index creating module 50 is configured to create indexes for the stored phone bill documents; and
the phone bill query module 60 is configured to inquire desired phone bill documents from the database 40 according to the indexes.

In the above, the database can comprise a sequence table 41 and a daily table 42.

Correspondingly, the phone bill storing module 30 writes the phone bill documents to the sequence table 41 according to a preset switching rule; and the index creating module 50 creates indexes for the sequence table.

Correspondingly, the system can further comprise a phone bill export module 70 configured to export the phone bill documents in the sequence table 41 to the daily table 42; and the index creating module 50 is further configured to create indexes for the daily table 41.

The system can further comprise a view creating module 80 configured to creates an intraday query view and a daily query view, to add the indexes of the sequence table 41 to the intraday query view and to add the indexes of the daily table 42 to the daily query view.

Correspondingly, the phone bill query module 60 is configured to inquire the desired phone bill documents from the database 41 according to the intraday query view and the daily query view.

The system can further comprise a data cleaning module 90 configured to clean the phone bill documents in the sequence table 41, the indexes of the sequence table 41, the phone bill documents in the daily table 42 and the indexes of the daily table 42.

Owing to the above description, the phone bill processing method and system provided by the embodiments of the present invention lower the conflict between the storage of the phone bill and the query of the same, and improves the disaster tolerating ability of a database and the efficiency of query of the phone bill.

Obviously, one skilled in the art shall understand that various modules and steps described above can be realized with general computing devices and can be integrated into one single computing device or distributed within a network consisting of multiple computing devices, and alternatively, the various modules and steps described above can be realized with the program codes executable by the computing devices, and thus these program codes can be stored in memory devices so as to be executed by the computing devices, or the various modules and steps described above can be formed into individual integrated circuit modules, or a plurality of the modules or steps can be formed into a single integrated circuit module so as to be realized. Therefore, the present invention is not limited to any particular hardware or software combination.

The descriptions above are only preferable embodiments of the present invention, and do not intend to restrict the present invention. For those skilled in the art, the present invention may have various changes and variations. Any modifications, equivalent substitutions, improvements and etc. within the spirit and principle of the present invention shall all be included in the scope of protection of the present invention.

## Claims

1. A phone bill processing method, **characterized by** comprising:
a phone bill collecting process collecting phone bill documents generated by a service processor; a phone bill storing process storing the phone bill documents, and an index creating process creating indexes for the phone bill documents; and a phone bill query process inquiring a desired phone bill document according to the indexes.

2. The phone bill processing method according to Claim 1, **characterized in that** when the phone bill collecting process collects phone bill documents, the method further comprises: the phone bill collecting process storing the phone bill documents to a local catalogue of the phone bill collecting process according to the generation time, and meanwhile deleting the phone bill documents generated by the service processor; and
correspondingly, the phone bill storing process storing the phone bill documents in the local catalogue according to the generation time of the phone bill documents.

3. The phone bill processing method according to Claim 2, **characterized in that** the step of the phone bill storing process storing the phone bill documents is:
the phone bill storing process writing, depending on a storage state of a sequence table in a database recorded by a preset logic control table, the phone bill documents into the sequence table of the database according to a preset switching rule; and
correspondingly, the step of the index creating process creating indexes for the phone bill documents is: the index creating process periodically creating indexes for the sequence table according to the storage state and the index state of the sequence table in the logic control table.

4. The phone bill processing method according to Claim 3, **characterized in that** after the index creating process creating indexes for the sequence table, the method further comprises:
a phone bill export process exporting periodically the phone bill documents in the sequence table to a daily table of the database according to the storage state, the index state and the export state of the sequence table in the logic control table; and
the index creating process creating periodically indexes for the daily table.

5. The phone bill processing method according to Claim 3 or 4, **characterized in that** the method further comprises: a view creating process creating an intraday query view and a daily query view, adding the indexes of the sequence table into the intraday query view and adding the indexes of the daily table into the daily query view; and
correspondingly, the step of the phone bill query process inquiring the desired phone bill documents according to the indexes is: the phone bill query process inquiring the desired phone bill documents from the intraday query view or the daily query view.

6. The phone bill processing method according to Claim 3 or 4, **characterized in that** the storage state of the sequence table comprises: blank table, storage in progress and storage completed;
the index state comprises: index not created and index created; and
the export state comprises: being not exported and being exported.

7. The phone bill processing method according to Claim 3 or 4, **characterized in that** the method further comprises: a data cleaning process cleaning periodically the phone bill documents in the sequence table, the indexes of the sequence table, the phone bill documents in the daily table and the indexes of the daily table.

8. A phone bill processing system, **characterized in that** the system comprises: a service processor, a phone bill collecting module, a phone bill storing module, a database, an index creating module and a phone bill query module, wherein,
the service processor, configured to generate phone bill documents;
the phone bill collecting module, configured to collect the phone bill documents;
the phone bill storing module, configured to store the phone bill documents;
the database, configured to save the stored phone bill documents; the index creating module, configured to create indexes for the stored phone bill documents; and
the phone bill query module, configured to inquire desired phone bill documents from the database according to the indexes.

9. The phone bill processing system according to Claim 8, **characterized in that** the database comprises a sequence table and a daily table;
correspondingly, the phone bill storing module writes the phone bill documents into the sequence table according to a preset switching rule; and
the index creating module creates indexes for the sequence table.

10. The phone bill processing system according to Claim 9,
**characterized in that** the system further comprises: a phone bill export module, configured to export the phone bill documents in the sequence table to the daily table;
correspondingly, the index creating module is further configured to create indexes for the daily table; and
the system further comprises a view creating module, configured to creates an intraday query view and a daily query view, to add the indexes of the sequence table into the intraday query view and to add the indexes of the daily table into the daily query view;
correspondingly, the phone bill query module, configured to inquire the desired phone bill documents from the database according to the intraday query view and the daily query view; and
the system further comprises a data cleaning module, configured to clean the phone bill documents in the sequence table, the indexes of the sequence table, the phone bill documents in the daily table and the indexes in the daily table.
